# EUROPEAN PATENT SPECIFICATION

(11) **EP 3 379 100 B1**
(45) Date of publication and mention of the grant of the patent: **04.03.2020**
(21) Application number: 18000018.4
(22) Date of filing: 10.01.2018
(51) Int. Cl.: F16D 48/10, F16D 48/06

(54) **VEHICLE CLUTCH ACTUATORS**
FAHRZEUGKUPPLUNGSAKTUATOREN
ACTIONNEURS D'EMBRAYAGE DE VÉHICULE

(30) Priority: 24.01.2017 GB 201701155
(43) Date of publication of application: 26.09.2018
(73) Proprietor: Raicam Clutch Limited, West Midlands B3 2AS (GB); AP Automotive Products Srl, 60030 Moie di Maiolati (IT)
(72) Inventor: Struve, Benjamin Chetwood, Kenilworth, Warwickshire CV8 2GN (GB); Child, David Stephen, Leamington Spa, Warwickshire CV33 9ST (GB); Colanero, Lorenzo, Lanciano (CH) (IT); Canestrari, Andrea, 61039 San Costanzo (PU) (IT)
(74) Representative: Morrall, Roger

(56) References cited:
- WO-A1-2015/043596
- DE-A1-102008 042 970
- GB-A- 2 112 101

## Description

This invention relates to vehicle driveline clutch actuators and in particular to such actuators in which an electric motor operates an associated clutch.

Such actuators are used in clutch control systems, for example as disclosed in the applicants pending application number WO2014/135831, in which engagement and disengagement of the clutch can be controlled both by a vehicle driver and also automatically in response to the current operating conditions of the vehicle and to damp torsional vibrations in the associated vehicle driveline.

GB2112101 also discloses a clutch actuating system in which a vehicle clutch is actuated manually from a foot pedal operated master cylinder whose operation can be blocked by a solenoid operated valve if both an engine speed sensor and gearbox input speed sensor detect speeds indication a risk of overspeeding of an associated transmission.

Whilst such clutch control systems can operate smoothly conditions can arise, particularly if there is a power failure, when the clutch may operate in an unexpected and potentially dangerous manner. It is an object to provide an actuator which can preclude such unexpected operation.

Thus according to the present invention there is provided a vehicle driveline clutch actuator comprising a electric motor for providing the actuating force to operate an associated clutch, an output member movement of which provides an output from the actuator to operate an associated clutch, and an actuating mechanism connecting the motor and output member to transmit the actuating force from the motor to the output member, the actuator being characterised in that a locking means is provided for locking the actuating mechanism in its current position if there is a failure pf electrical power to the motor of the actuator thus preventing movement of any associated clutch connected with the output member and preventing any unexpected torque being applied to the driveline if the clutch were to unexpectedly engage.

The locking means may comprise a spring-loaded plunger engageable with gear teeth or other formations in the actuating mechanism which connects the motor to the output member to hold the actuator against movement.

Typically the plunger is held out of engagement with the gear teeth or other formation by an electrically operated solenoid when the clutch actuator is operating normally and the plunger engages the gear teeth or other formation under spring action when required to lock the actuating mechanism.

In an alternative embodiment the locking means may comprise a friction brake which when engaged holds the motor against rotation to hold the actuator against movement.

The friction brake may be spring biased into engagement to hold the motor against rotation and may be disengaged by a magnetic coil which is activated when the clutch actuator is operating normally to allow operation of the actuator.

A friction member may rotate with an output shaft of the motor and a pressure plate may be held against rotation relative to a motor casing and may be spring biased to clamp the friction member against the motor casing to prevent operation of the actuator, the pressure plate being drawn away from the friction member when the magnetic coil is activated to allow operation of the actuator.

The invention also provides a clutch control system including an actuator as described above in which if there is a failure of power to the motor of the actuator this occurrence is arranged to activate the locking means to prevent any unexpected torque being applied to the driveline if the clutch were to unexpectedly engage.

Such a control system may be arranged to receive a signal if the level of opening of the clutch is less than that commanded by a driver operated clutch control pedal, the locking means being activated to ensure that the clutch is maintained in an open position when such a signal is received.

In one form of actuator in accordance with the invention, the actuating mechanism is characterised in that it moves an output member in the form of a piston in a hydraulic master cylinder housed in the actuator to displace hydraulic fluid into a slave cylinder adjacent the clutch which operates the clutch.

In an alternative form of actuator a cable or other mechanical device connects the actuator with the clutch.

The present invention will now be described, by way of example only, with reference to the accompanying drawings in which:-
Figure 1 is a diagrammatic representation of a clutch control system including an actuator according to the present invention;
Figure 2 shows a simple electrical supply circuit for a locking solenoid and motor of the actuator shown in Figure 1;
Figures 3 and 4 show sections through a first from of actuator showing some of its internal details;
Figure 5 shows an alternative electrical supply circuit for a locking solenoid and motor of the actuator shown in Figure 1;
Figure 6 shows a cross section through a motor of a second form of actuator in accordance with the present invention in which a brake type locking means is used , and
Figure 7 shows an exploded perspective view of the motor of Figure 6.

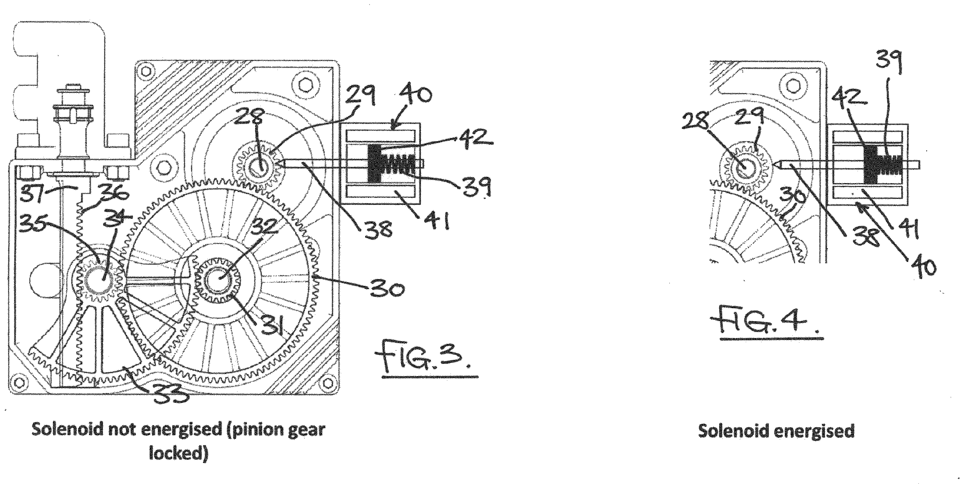

Referring to the drawings, a vehicle driveline clutch 10 is operated by a hydraulic concentric slave cylinder 11 which acts on clutch operating levers 12 in a conventional manner. Slave cylinder 11 is operated via a hydraulic line 14 by a hydraulic piston 13 in a clutch actuator 15. Piston 13 is moved by an electric motor 16 via an actuating mechanism 17 shown in more detail in Figures 3 and 4. The position of piston 13 is controlled by an electronic clutch control system 18 which issues commands to the motor 16 via a motor controller 19.

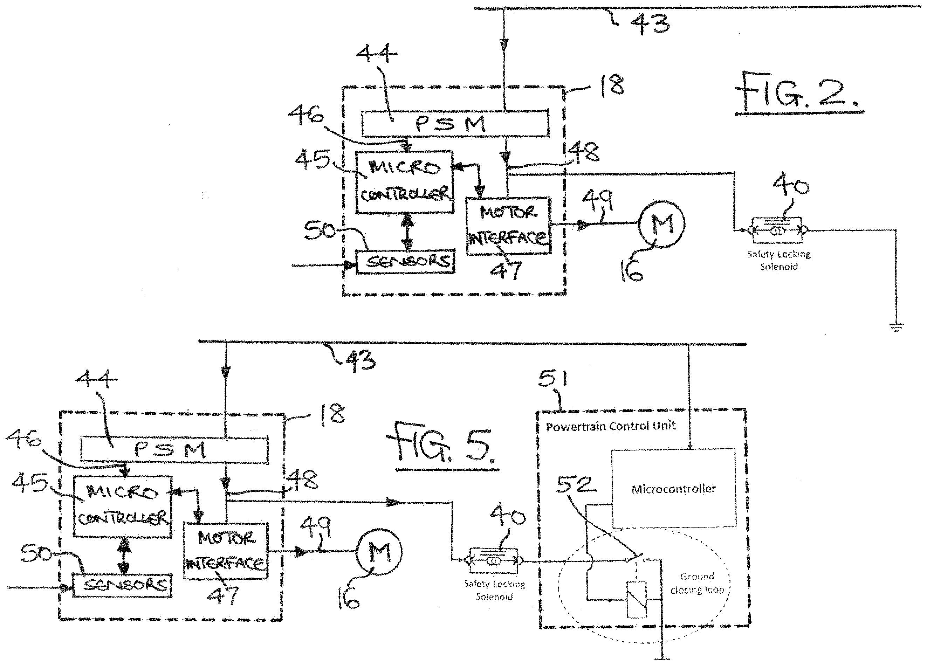

The clutch control system 18 receives input signals on various operating parameters of the vehicle and from an engine control unit 20 via a vehicle CAN network 21. A driver operated clutch control pedal 22 which is pressed against a pedal force generating spring 23 is provided with a pedal angle sensor 24 which provides a pedal position indication via the engine control unit and CAN 21 to the clutch control system 18. Other inputs to the clutch/electric motor control are provided in the form of a motor angle sensor 25 and a piston position sensor 26 which is used to determine the actual open/closed position of the clutch 10. Power is supplied to the clutch/motor controls 18 and 19 from a power supply 27 shown in more detail in Figures 2 and 5.

In Figures 3 and 4 motor 16 has an output spindle 28 which drives a pinion gear 29. This pinion gear meshes with a larger gear 30 which carries a small gear 31 surrounding its mounting shaft 32. Gear 31 in turn meshes with a toothed gear quadrant 33 mounted on a shaft 34. Quadrant 33 carries a small gear 35 surrounding shaft 34 which meshes with a rack 36 on a push rod 37 which moves piston 13. The meshing gears, quadrant and push rod 29 to 37 together form actuating mechanism 17 connecting motor 16 and the piston 13. Piston 13 forms the output member of the actuator which operates the clutch operating slave cylinder 11. These meshing gears and quadrant operate as a reduction gearing which typically provides an overall gear reduction of 25:1.

In accordance with the present invention the actuator 15 is provided with a locking means in the form of a plunger 38 which is spring-loaded into engagement with the teeth of gear 29 by a spring 39 to hold the actuator against movement and thus lock the clutch in its current position. The plunger 38 is provided with an electromagnetic solenoid 40 having a coil 41 which when activated draws a magnet 42 on plunger away from gear 29 thus disengaging the plunger from gear 29 (see Figure 4) to allow movement of motor spindle 28 and thus push rod 37 to operate the clutch.

Figure 2 shows a simple electrical circuit for the supply of power to the motor 16 and the solenoid 40 of locking plunger 38. In this arrangement the power is routed to solenoid 40 and motor 16 from a battery voltage on line 43 via the clutch control unit 18. Within control unit 18 a power supply management function 44 supplies a microcontroller 45 via a connection 46 and also a motor interface 47 and the solenoid 40 via a connection 48. Motor interface 47 supplies motor 16 via line 49 and microcontroller 45 receives sensor inputs via interface 50.

Normally during the operation of the clutch control actuator when power is supplied to motor 16 via connection 48 solenoid 40 is also activated to hold plunger 38 out of contact with gear 29 to allow operation of the clutch by motor 16 but, in the event of the occurrence of a power failure to connection 48 the power supply to solenoid 40 is also cut allowing plunger 38 to engage gear 29 and lock the clutch in its current condition.

Figure 5 shows an alternative electrical supply circuit for the motor 16 and solenoid 40 in which power to solenoid is again routed via clutch control unit 18 and also via an additional control unit 51 (which may form part of the engine control unit 20) which is constantly checking if the level of opening of the clutch 10 is at least equal to the level of opening requested by the control pedal 22. Control unit 51 opens a switch 52 to deactivate the solenoid 40 and release plunger 38 to engage gear 29 thus locking the clutch in its current position if the actual open condition of the clutch does not at least equal that requested by the pedal 22. Thus this circuit deactivates the solenoid in the event of the failure of the power supply to the motor or the failure of the actual clutch open position to at least match that selected by the pedal 22.

These two triggers for deactivating the solenoid can be used, for example, if the clutch starts to engage when the pedal 22 is depressed and the vehicle is standing at a traffic junction. Typically this might occur if either the power supply to the motor 16 has failed or the clutch opening monitoring system detects that the current clutch opening position is less than that selected by the driver. In these circumstances the solenoid 40 is quickly deactivated to hold the clutch open and prevent the vehicle lurching forward in traffic.

Problems can also arise when the vehicle is rolling on a low friction surface such as ice when the clutch control system might try to engage the clutch thereby applying engine braking torque to the road wheels despite the driver having depressed the clutch pedal. In these circumstances the clutch opening monitoring system will again detect that the current clutch opening position is less than that selected by the driver and the solenoid 40 will again be quickly deactivated to hold the clutch open and thus prevent vehicle instability on the low friction surface due to sudden clutch engagement.

It will be appreciated that the position of plunger 38 can be changed to act on any of the teeth of the gears, quadrant or push rod which form part of the actuating mechanism 17.

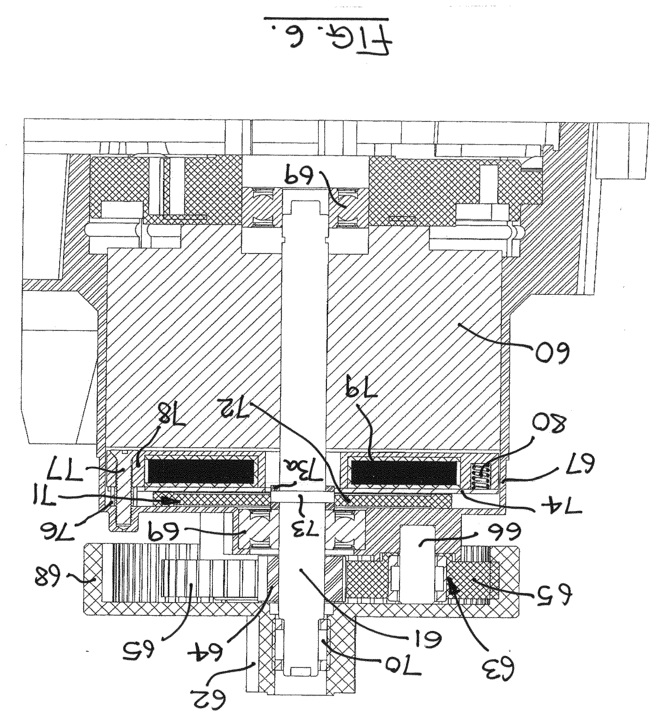

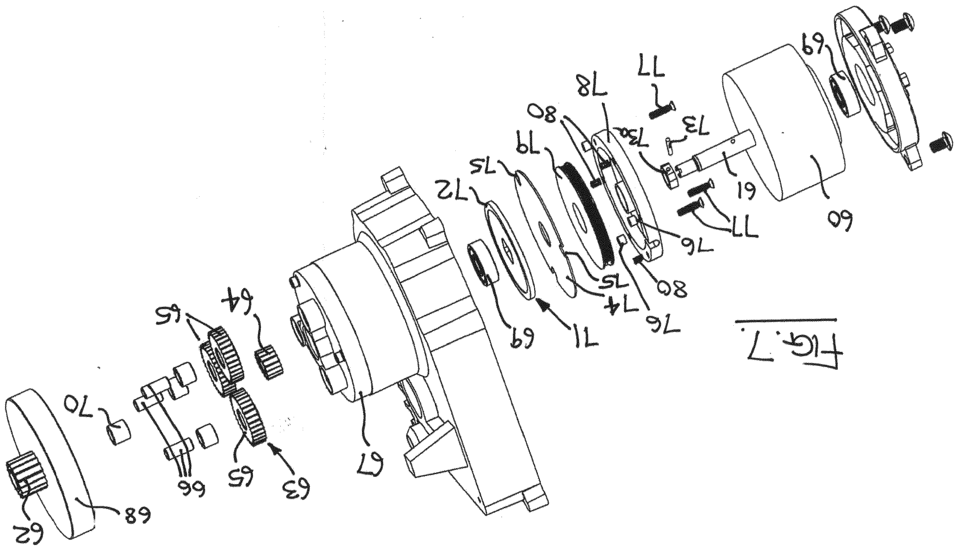

Figures 6 and 7 show a motor 60 used in a second form of actuator in accordance with the present invention in which the motor has an output shaft 61 which drives an output gear 62 via an epicyclic reduction gear 63 having a sun gear 64 which rotates with shaft 61 and engages planet gears 65 mounted on pins 66 supported on motor casing 67. Planet gears 65 in turn engage an internal ring gear 68 formed integrally with output gear 62. Shaft 61 is supported in casing 67 via spaced bearings 69 and output gear 62 and ring gear 68 are supported on shaft 61 via bearing 70.

Output gear 62 may, for example, be either directly connected with toothed push rod 37 or with push rod 37 via additional gearing (not shown) depending on the design of the particular installation.

The locking means for the motor comprises a friction brake 71 in the form of a brake disc 72 connected for rotation with shaft 61 via a pin 73 and drive collar 73a and a pressure plate 74 which is held against rotation relative to motor casing 67 by cut outs 75 (see Figure 7) which engage anti squeeze bushes 76 secured to casing 67 by bolts 77. Bolts 77 also secure a support member 78 for actuating coil 79 to casing 67. Coil springs 80 are mounted in support member 78 to bias pressure plate 74 into contact with brake disc 72 to lock the shaft 61 against rotation when coil 79 is not activated. When coil 79 is activated the pressure plate is drawn towards the coils 79 and so disengages brake disc 72 to allow the actuator to operate.

Anti squeeze bushes 76 ensure that coil 79 is maintained at a spaced location from casing 67 to allow rotation of brake disc 72 when coil 79 is activated.

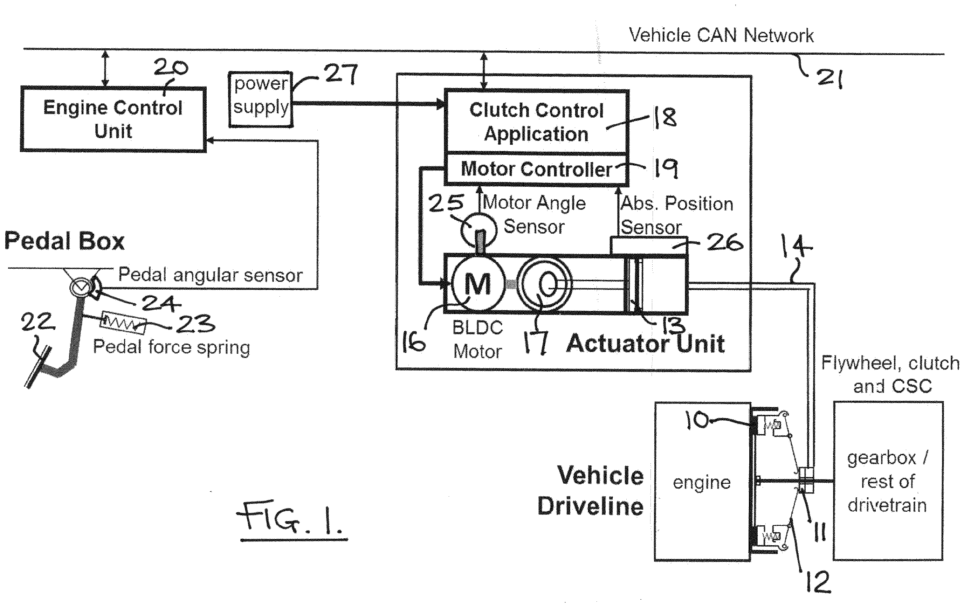

Thus during normal operation of the actuator coil 79 is activated to disengage brake 71 and the coil 79 is deactivated to engage the brake and prevent operation of the clutch actuator in the various circumstances outlined above in relation to Figures 1 to 5.

Although the invention has been described above in both embodiments in relation to a hydraulic actuator it will be understood that the action of a cable or other mechanical device can be used to connect the actuator to the clutch. For example, the push rod 37 could be connected with a cable or other mechanical linkage the other end of which operates the clutch levers 12.

## Claims

1. A vehicle driveline clutch actuator (15) comprising a electric motor (16) for providing the actuating force to operate an associated clutch, an output member (13) movement of which provides an output from the actuator to operate an associated clutch (10), and an actuating mechanism (17) connecting the motor and output member to transmit the actuating force from the motor to the output member, the actuator being **characterised in that** a locking means(38) is provided for locking the actuating mechanism (17) in its current position if there is a failure of electrical power to the motor (16) of the actuator thus preventing movement of any associated clutch (10) connected with the output member (13) and preventing any unexpected torque being applied to the driveline if the clutch (10) were to unexpectedly engage.

2. An actuator according to claim 1 **characterised in that** the actuating mechanism moves an output member in the form of a piston (13) in a hydraulic master cylinder housed in the actuator (15) to displace hydraulic fluid into a slave cylinder (11) adjacent the clutch (10) which operates the clutch.

3. An actuator according to claim 1 **characterised in that** the output member is connected with the clutch (10) by a cable or other mechanical device.

4. An actuator according to claim 2 or 3 **characterised in that** the locking means comprises a spring-loaded plunger (38) engageable with gear teeth (29) or other formations in the actuating mechanism (29-37) which connects the motor (16) to the output member (13) to hold the actuator against movement.

5. An actuator according to claim 4 **characterised in that** the plunger (38) is held out of engagement with the gear teeth (29) or other formation by an electrically operated solenoid (40) when the clutch actuator is operating normally and the plunger (38) engages the gear teeth (29) or other formation under spring action (39) when required to lock the actuating mechanism.

6. An actuator according to claim 2 or 3 **characterised in that** the locking means comprises a friction brake (71) which when engaged holds the motor (60) against rotation to hold the actuator against movement.

7. An actuator according to claim 6 **characterised in that** the friction brake (71) is spring biased (80) into engagement to hold the motor (60) against rotation and is disengaged by a magnetic coil (79) which is activated when the clutch actuator is operating normally to allow operation of the actuator.

8. An actuator according to claim 7 **characterised in that** a friction member (72) rotates with an output shaft (61) of the motor (60) and a pressure plate (74) is held against rotation relative to a motor casing (67) and is spring biased (80) to clamp the friction member (72) against the motor casing (67) to prevent operation of the actuator, the pressure plate being drawn away from the friction member when the magnetic coil (79) is activated to allow operation of the actuator.

9. A clutch control system including an actuator according to any one of claims 1 to 8 **characterised in that** it is arranged to receive a signal, if the level of opening of the clutch is less than that commanded by a driver operated clutch control pedal (22), to activate the locking means (29, 71) to ensure that the clutch (10) is maintained in an open position when such a signal is received.

## Patentansprüche

1. Fahrzeugantriebsstrang-Kupplungsaktuator (15) mit einem Elektromotor (16) zum Bereitstellen der Stellkraft zum Betätigen einer zugehörigen Kupplung, einem Ausgabeteil (13), dessen Bewegung eine Ausgabe von dem Aktuator zum Betätigen einer zugehörigen Kupplung (10) liefert, und einem Betätigungsmechanismus (17), der den Motor mit dem Ausgabeteil verbindet, um die Stellkraft von dem Motor auf das Ausgabeteil zu übertragen, wobei der Aktuator **dadurch gekennzeichnet ist, dass** eine Blockiereinrichtung (38) zum Blockieren des Betätigungsmechanismus (17) in seiner momentanen Stellung, wenn es einen Ausfall von elektrischer Energie zu dem Motor (16) des Aktuators gibt, vorgesehen ist, infolgedessen eine Bewegung von irgendeiner zugehörigen Kupplung (10), die mit dem Ausgabeteil (13) verbunden ist, verhindert wird und verhindert wird, dass irgendein unerwartetes Drehmoment auf den Antriebsstrang aufgebracht wird, wenn die Kupplung (10) unerwartet einrücken würde.

2. Aktuator nach Anspruch 1, **dadurch gekennzeichnet, dass** der Betätigungsmechanismus ein Ausgabeteil in Form eines Kolbens (13) in einem hydraulischen Geberzylinder, der in dem Aktuator (15) untergebracht ist, bewegt, um Hydraulikflüssigkeit in einen an die Kupplung (10) angrenzenden Nehmerzylinder (11) zu verschieben, der die Kupplung betätigt.

3. Aktuator nach Anspruch 1, **dadurch gekennzeichnet, dass** das Ausgabeteil mit der Kupplung (10) durch ein Kabel oder eine andere mechanische Vorrichtung verbunden ist.

4. Aktuator nach Anspruch 2 oder 3, **dadurch gekennzeichnet, dass** die Blockiereinrichtung einen federbelasteten Stößel (38) aufweist, der mit einer Verzahnung (29) oder anderen Gebilden in dem Betätigungsmechanismus (29-37) in Eingriff bringbar ist, der den Motor (16) mit dem Ausgabeteil (13) verbindet, um den Aktuator von einer Bewegung abzuhalten.

5. Aktuator nach Anspruch 4, **dadurch gekennzeichnet, dass** der Stößel (38) außer Eingriff mit der Verzahnung (29) oder einem anderen Gebilde durch ein elektrisch gesteuertes Solenoid (40) gehalten wird, wenn der Kupplungsaktuator normal arbeitet, und der Stößel (38) in die Verzahnung (29) oder das andere Gebilde durch Federkraft (39) eingreift, wenn es notwendig ist, den Betätigungsmechanismus zu blockieren.

6. Aktuator nach Anspruch 2 oder 3, **dadurch gekennzeichnet, dass** die Blockiereinrichtung eine Reibungsbremse (71) aufweist, die, wenn angelegt, den Motor (60) von einer Drehung abhält, um den Aktuator von einer Bewegung abzuhalten.

7. Aktuator nach Anspruch 6, **dadurch gekennzeichnet, dass** die Reibungsbremse (71) in Anlage federvorgespannt (80) ist, um den Motor (60) von einer Drehung abzuhalten, und durch eine Magnetspule (79) gelöst wird, die erregt wird, wenn der Kupplungsaktuator normal arbeitet, um den Betrieb des Aktuators zu gestatten.

8. Aktuator nach Anspruch 7, **dadurch gekennzeichnet, dass** sich ein Reibungsteil (72) mit einer Ausgangswelle (61) des Motors (60) dreht und eine Druckplatte (74) von einer Drehung relativ zu einem Motorgehäuse (67) abgehalten wird und federvorgespannt (80) ist, um das Reibungsteil (72) an das Motorgehäuse (67) zu klemmen, um den Betrieb des Aktuators zu verhindern, wobei die Druckplatte weg von dem Reibungsteil gezogen wird, wenn die Magnetspule (79) erregt ist, um den Betrieb des Aktuators zu gestatten.

9. Kupplungssteuerungssystem, das einen Aktuator nach irgendeinem der Ansprüche 1 bis 8 einschließt, **dadurch gekennzeichnet, dass** es ausgebildet ist, um ein Signal zu empfangen, wenn der Grad der Öffnung der Kupplung geringer ist als derjenige, der von einem fahrerbetätigten Kupplungssteuerungspedal (22) befohlen wird, um die Blockiereinrichtung (29, 71) zu aktivieren, um sicherzustellen, dass die Kupplung (10) in einer Offenstellung gehalten wird, wenn ein derartiges Signal empfangen wird.

## Revendications

1. Actionneur d'embrayage de transmission de véhicule (15) comprenant un moteur électrique (16) destiné à fournir la force d'actionnement pour faire fonctionner un embrayage associé dont un mouvement d'élément de sortie (13) fournit une sortie de l'actionneur pour faire fonctionner un embrayage associé (10), et un mécanisme d'actionnement (17) connectant le moteur et l'élément de sortie pour transmettre la force d'actionnement du moteur à l'élément de sortie, l'actionneur étant **caractérisé par le fait qu'**un moyen de verrouillage (38) est prévu pour verrouiller le mécanisme d'actionnement (17) dans sa position actuelle en cas de défaillance de l'alimentation électrique vers le moteur (16) de l'actionneur empêchant ainsi le mouvement de tout embrayage associé (10) connecté à l'élément de sortie (13) et empêchant que tout couple inattendu ne soit appliqué à la transmission si l'embrayage (10) devait entrer en prise de manière inattendue.

2. Actionneur selon la revendication 1, **caractérisé par le fait que** le mécanisme d'actionnement déplace un élément de sortie sous forme de piston (13) dans un cylindre principal hydraulique logé dans l'actionneur (15) pour déplacer le fluide hydraulique vers un cylindre récepteur (11) adjacent à l'embrayage (10) qui fait fonctionner l'embrayage.

3. Actionneur selon la revendication 1, **caractérisé par le fait que** l'élément de sortie est connecté à l'embrayage (10) par un câble ou autre dispositif mécanique.

4. Actionneur selon la revendication 2 ou 3, **caractérisé par le fait que** le moyen de verrouillage comprend un plongeur à ressort (38) pouvant venir en prise avec les dents d'engrenage (29) ou d'autres formations dans le mécanisme d'actionnement (29 à 37) qui connecte le moteur (16) à l'élément de sortie (13) pour empêcher que l'actionneur ne se déplace.

5. Actionneur selon la revendication 4, **caractérisé par le fait que** le piston (38) est maintenu hors prise avec les dents d'engrenage (29) ou une autre formation par une soupape électromagnétique à commande électrique (40) lorsque l'actionneur d'embrayage fonctionne normalement et que le plongeur (38) entre en prise avec les dents d'engrenage (29) ou une autre formation sous l'action du ressort (39) lorsqu'il est nécessaire de verrouiller le mécanisme d'actionnement.

6. Actionneur selon la revendication 2 ou 3, **caractérisé par le fait que** le moyen de verrouillage comprend un frein à friction (71) qui, lorsqu'il est en prise, empêche le moteur (60) de tourner pour empêcher que l'actionneur ne se déplace.

7. Actionneur selon la revendication 6, **caractérisé par le fait que** le frein à friction (71) est amené en prise par un ressort (80) pour empêcher que le moteur (60) ne tourne, et est dégagé par une bobine magnétique (79) qui est activée lorsque l'actionneur d'embrayage fonctionne normalement pour permettre le fonctionnement de l'actionneur.

8. Actionneur selon la revendication 7, **caractérisé par le fait qu'**un élément de friction (72) tourne avec un arbre de sortie (61) du moteur (60) et qu'une plaque de pression (74) est empêchée de tourner par rapport à un carter de moteur (67) et est amenée par un ressort (80) à serrer l'élément de friction (72) contre le carter de moteur (67) pour empêcher le fonctionnement de l'actionneur, la plaque de pression étant retirée de l'élément de friction lorsque la bobine magnétique (79) est activée pour permettre le fonctionnement de l'actionneur.

9. Système de commande d'embrayage comportant un actionneur selon l'une quelconque des revendications 1 à 8, **caractérisé par le fait qu'**il est aménagé pour recevoir un signal si le niveau d'ouverture de l'embrayage est inférieur à celui commandé par une pédale de commande d'embrayage (22) actionnée par le conducteur, pour activer le moyen de verrouillage (29, 71) pour assurer que l'embrayage (10) soit maintenu dans une position ouverte lorsqu'un tel signal est reçu.
